# EUROPEAN PATENT SPECIFICATION

(11) **EP 1 820 349 B1**
(45) Date of publication and mention of the grant of the patent: **01.12.2010**
(21) Application number: 05813196.2
(22) Date of filing: 01.12.2005
(51) Int. Cl.: H04N 7/173, H04N 5/00

(54) **BROADBAND COMMUNICATION NETWORK PROVIDED WITH MEDIA STORAGE**
BREITBANDKOMMUNIKATIONSNETZ MIT MEDIENSPEICHER
RESEAU DE COMMUNICATION A BANDE LARGE EQUIPE D'UN DISPOSITIF DE STOCKAGE MULTIMEDIA

(30) Priority: 06.12.2004 IL 16558504
(43) Date of publication of application: 22.08.2007
(73) Proprietor: ECI Telecom Ltd., Petach-Tikva 49517 (IL)
(72) Inventor: NAHUMI, Dror, NJ, New Jersey 07712 (US); STEIN, Shai, Hod Hasharon 45201 (IL)
(74) Representative: Modiano, Micaela Nadia
(86) International application number: PCT/IL2005/001282
(87) International publication number: WO 2006/061821

(56) References cited:
- WO-A-01/31605
- WO-A-2004/025405
- US-A- 5 940 738
- US-B1- 6 748 481
- US-B1- 6 804 825

## Description

### FIELD OF THE INVENTION

This invention generally relates to distributed systems and more particularly, to a method and apparatus for allowing communication in access networks along subscribers' lines.

### BACKGROUND OF THE INVENTION

At the present, Digital Subscriber Line (DSL) service is offered by telecommunication service providers mainly for the application of broadband Internet access. The service utilizes the copper wires originally deployed for telephony services, to connect customer premises (CPE) DSL modems, and a central office Digital Subscriber Line Access Multiplexer (DSLAM). In many modern applications the DSLAM functionality is distributed to remote terminals aggregated by an aggregation device located in a centralized location. In the alternative, such functionalities are carried in Passive Optical networks ("PON") by an Optical Line Termination ("OLT") that communicates with Optical Network Units ("ONUs") or Optical Network Terminations ("ONTs"). Therefore the term "DSLAM" as will be used herein should be understood to encompass any such device which is operative to receive traffic from the network side at a first bandwidth and convey traffic towards the subscribers wherein the traffic that can be conveyed to the different subscribers has an aggregate second bandwidth, and wherein the second bandwidth is substantially higher than the first bandwidth. Therefore, devices characterized by having current DSLAM architecture, as well as OLT devices and also a plurality of remote terminals and their respective aggregation devices, as a single virtual unit, should all be understood to be encompassed under the term DSLAM as will be used hereinafter.

Recent advances in modulation technologies allow higher rates of transport over DSL lines. Further, competition on telecommunication services drives local service providers to deploy more services such as video over IP (IP-TV) and voice over IP (VoIP) over the same DSL infrastructure.

The IP-TV service is offered to consist of various capabilities in order to successfully compete with traditional analog cable, digital cable, and digital satellite broadcast. These capabilities include features such as basic broadcast channels; premium broadcast channels; video on demand ("VoD"), Personal Video Recording ("PVR"), etc.

VoD solutions are currently delivered via special equipment used for storing the content that can be provided on demand to the users. Originally, VoD servers were developed as a centralized disk array which holds all the content and is able to distribute to all VoD users simultaneously over a high bandwidth connection, typically available over cable (CATV) networks. Direct Unicast connections between users and the VoD server demand high bandwidth allocation in the broadband networks. To lower this bandwidth demand, distributed VoD solutions, located closer to the users, are offered.

PVR is a video storage application, mostly provided as an integrated feature in the users set top box ("STB"). Few solutions exist that offer PVR as a network service using similar technologies to VoD.

Most digital TV services are offered such that all streams are multicast at the network headend to a single, high bandwidth stream. When a user selects a specific broadcast channel, one element in the network is used to separate this channel from the multicast stream and transmit it to the user over a limited bandwidth connection. In IP-TV over DSL applications, the DSLAM is typically used for that purpose, hence the need to optimize the network bandwidth requirements from the DSLAM to the broadband network.

An inherent problem with channel change of digital video streams is the average delay created in the video decoder (typically located at the user premises), until a video signal is sent to the television set. To overcome this limitation, several solutions were proposed.

One solution is described in US 6804825, which discloses a method of operating a video on demand system by which a user-requested video program is presented at the user's terminal, after being transmitted over a first transmission channel. In response to a user action, the transmission is interrupted and in response to a subsequent action, the transmission is resumed over a second transmission channel different than the first, while automatically retuning the client terminal to present the resumed transmission over the viewing channel.

US 6748481 describes an appliance for handling streaming (video/audio) information received via Internet by writing blocks in circular buffer. The information appliance includes a buffer, a writer module which receives blocks of streaming information and writes the blocks to the buffer at a write position, and a reader module which selectively reads the blocks from the buffer at a read position. An adjustment mechanism adjusts the relative positions of the read and write position.

WO0131605 discloses a system and method for optimizing bandwidth efficiencies in the distribution of digital video, digital audio and data over a cable television system. The system comprises a dynamic bandwidth manager, which monitors customer usage patterns and reacts to them, by instructing a remultiplexer to allocate bandwidth from digital services that need less bandwidth to other services that need more bandwidth.

In summery, different applications require the use of video storage technologies close to the edge of the network, and in proximity to the DSLAM.

### SUMMARY OF THE INVENTION

In order to solve the above described problems, one of the objects of the present invention is provide a solution to incorporate the video storage sub-system, supporting the VOD, network PVR, and fast channel change applications to be integrated with the DSLAM framework. The DSLAM is enhanced to include local prioritization mechanism as specified by the applications utilizing the video storage device. The scope of the invention is to be defined by the appended claims.

According to a first embodiment of the present invention there is provided a DSLAM comprising:
a network side interface adapted to receive a plurality of communication signals conveyed along a broadband network;
a storage means adapted to receive at least some of the plurality of communication signals, associate a priority, preferably by using selection criteria, with the communication signals received thereat and store their content in accordance with the associated priority;
multiplexing means operative to retrieve the content stored in the storage means and multiplex the content thus received with run time data received at the network side interface, into a multiplexed product, wherein this step of multiplexing is carried while ensuring a minimum pre-defined quality of service for the multiplexed product;
a subscribers' output interface adapted to receive the multiplexed product from the multiplexing means and forward it.along a communication line extending towards a subscriber; and
a subscribers' input interface adapted to receive information generated by the subscribers.

In accordance with a preferred embodiment of the invention, the retrieval of content stored in the storage means is carried in response to information (e.g. command) received from one or more of the subscribers.

According to an embodiment of the invention, the pre-defined quality of service is determined based on a type of application by which the content of the multiplexed product is characterized.

By yet another embodiment of the invention, the priority associated with the communication signals is based on a type of application by which the contents of the communication signals will be utilized.

Preferably, the communication signals are selected from the group consisting of: data signals, video signals, unicast video signals, multicast video signals, facsimile signals, audio signals, voice signals and any combination thereof.

In accordance with yet another embodiment, the subscriber's output interface is further adapted to forward the multiplexed product in accordance with a bandwidth associated with the subscriber's communication line.

By still another embodiment of the invention, the subscriber's output interface is further adapted to forward the multiplexed product in accordance with priorities associated with one or more of the components comprising the multiplexed product. In addition or in the alternative, the subscriber's output interface is further adapted to forward the multiplexed product in accordance with a priority that is assigned to the multiplexed product, preferably by the multiplexing means.

According to another preferred embodiment of the invention, implementing personal video recording (such as PVR or DVR) in the DSLAM is done by storing part or all of multicast broadcast video streams based on the subscriber's commands.

In accordance with yet another embodiment of the invention, the multiplexed product is a video stream adapted to be shared by a plurality of subscribers.

By still another embodiment of the invention, the storage means is further operative to allocate storage space to store certain amount of content for each of the communication signals that are stored.

Preferably, the multiplexing means is further adapted to classify the multiplexed product in accordance with pre-defined criteria and assign the priority for the multiplexed product in accordance with that classification. More preferably, the priority is assigned so as to assure a minimum quality of service required for the type of classification associated with the multiplexed product. In addition or in the alternative, some or all of the bandwidth limitations existing along the communication line that extends towards the subscriber, effect the priority assigned to the multiplexed product.

In accordance with yet another embodiment, the DSLAM further comprises a storage adapted to hold a plurality of multicast video signals and identify at least one of the multicast video signals that is in conformity with information generated by a subscriber (e.g. a command initiated by a subscriber using a remote control to convey that command via his/her set top box towards the subscribers' input interface. Such a command can be for example a change in the channel being viewed).

In addition or in the alternative, the DSLAM is further adapted to unicast the at least one of the video signals identified, to the subscriber generating the information.

According to yet another embodiment, the DSLAM of the invention is further adapted to associate one or more of the video signals stored at the storage means, with a subscriber, and forward the one or more video signals to the subscriber in response to a command received from the subscriber.

By yet another embodiment of the invention, the storage means are adapted to allocate a pre-defined storage space for storing incoming communication signals. Preferably, the allocation is made in accordance with the type of application by which the content of the incoming communication signals is characterized (e.g. the video streams). Still preferably, after having the allocated storage space filled, any further information that should be stored at that storage space, shall replace the oldest information stored at the allocated storage space. In other words, according to this embodiment content is stored in the allocated space for x units of time and thereafter, as in a FIFO mechanism, the oldest information will be replaced with the new information.

### BRIEF DESCRIPTION OF THE DRAWINGS

A better understanding of the present invention is obtained when the following non-limiting detailed description is considered in conjunction with the following drawings in which:
FIG. 1 illustrates a schematic presentation of a prior art DSLAM and its incorporation in an access network;
FIG. 2 illustrates a schematic presentation of a DSLAM constructed according to an embodiment of the present invention;
FIG. 3A shows a schematic presentation of a prior art network while FIG. 3B shows a schematic presentation of a network operative according to an embodiment of the present invention;
FIG. 4 is a flow chart diagram illustrating a method for establishing a communication session in response to user request for new video service, according to an embodiment of the present invention; and
FIG. 5 shows an example of hierarchical level scheme for managing storage of video streams in accordance with an embodiment of the present invention.

### DETAILED DESCRIPTION OF THE INVENTION

Reference will now be made in detail to an implementation consistent with some embodiments of the present invention as illustrated in the accompanying drawings.

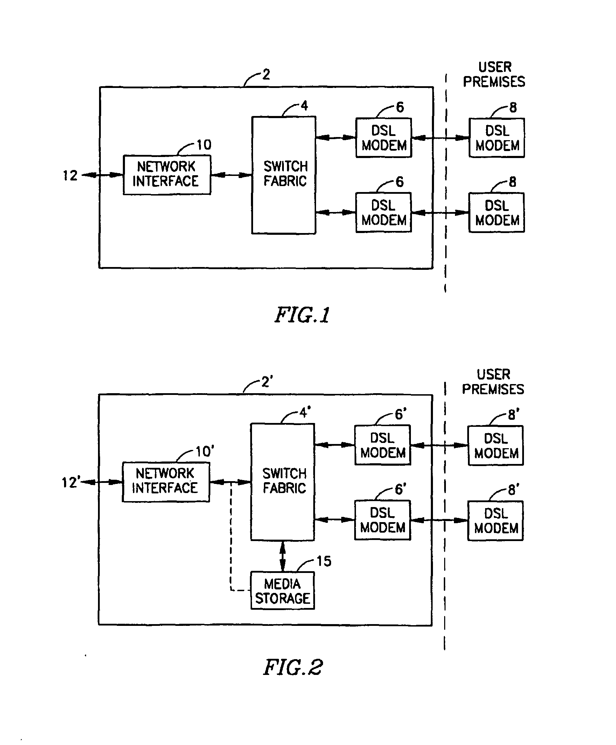

Fig. 1 presents a schematic diagram of a prior art DSLAM **2** comprising the following elements (in either centralized or distributed architecture):
Network interface **10 -** used to connect DSLAM **2** to service provider network **12** (not shown in this Fig), allowing the exchange of digital signals with that network; Switching fabric **4 -** used to receive digital signals, have them multiplexed and concentrated by lowering the total bandwidth required for sending transmissions to the users. This means that not all bandwidth pre-allocated to the different users can indeed be provided to all of them, all the time;
   DSL modems **6 -** used to transport the concentrated high rate data over copper wires to the subscribers, and receive transmissions from them.

Let us revert now to Fig. 2, which describes a DSLAM constructed in accordance with an embodiment of the present invention. In this DSLAM, storage **15** is provided, operative to support all media storage applications required for the DSLAM switching and multiplexing sub-system **4.** The actual storage sub-system **15** may be implemented as an internal or external part of the DSLAM. The storage sub-system of this example, is a digital media (for voice, video, data signals) storage (DMS) server integrated with the DSLAM of the broadband transport system.

Through the network input interface **10,** various inputs of media content such as voice streams, single video streams, multicast video streams, and data streams are received from the broadband transport network, while network output interface **10** is operative to multiplex media content from the DMS for transmission towards the network, for applications such as video file sharing among users.

The subscribers' side media output interface is operative to multiplex the media content stored in the DMS and sent to subscribers along with the real time data transmitted to the subscriber, along the same subscriber line. The subscribers' side media input interface is operative to receive media content from the subscribers and store it in the DMS.

Preferably, the storage sub-system is further provided with an internal bandwidth and storage broker controller setting bandwidth and storage space priorities to each of the different media storage streams.

Typically, a processor is used to control the overall operations of the DMS.

The DMS of the present example has a built in stream priority mechanism able to assign different priorities to different streams: various media streams stored in the DMS and real time streams sent between the network and the subscriber. Priority is set according to the specifics of each application. This prioritization assures the appropriate quality of service of the stored media streams over the bandwidth limitations available over each subscriber line.

The DMS may be used as a buffer required for the implementation of fast digital TV channel surfing. In such application, the DMS buffers all multicast video streams and is able to uniquely search and send unicast streams immediately after the subscriber changes a channel with no load to the network interface or the broadband network.

The DMS can also be used for the application of network PVR and stores only the content required by the subscriber and allowed by the service provider with no load to the network interface or the broadband network. This allows the subscribers to have their personal media data stored at the DMS for later use, e.g. upon sending the DSLAM with appropriate command to retrieve their personal media stored and have it transmitted along the corresponding subscribers' lines.

The DMS may also be used for the application of VoD. Most modern VoD systems distribute mostly used titles to disk replicas located at the service provider premises. The DMS (or part of it) can be used for that purpose.

The DMS may further be used for the application of voicemail. If the user uses the broadband access transport system for telephony applications, this feature will be provided with no load to the network interface or the broadband network.

The storage used in the DMS can be made out of the combination of one or more storage technologies. For example, solid state (DRAM, Flash) and/or mechanical disk.

As demonstrated before, part of the capacity of the DSLAM's storage means may be reserved for media content associated with one or more of the subscribers.

Preferably, the storage means is further provided with storage formatting means, operative to allocate different storage sizes according to the media content and/or application to be stored. In addition or in the alternative, the allocation is done in accordance with a service provisioning agreement, pre-signed with the respective subscribers.

Also, according to an embodiment of the invention, at least part of the capacity of the storage is allocated with subscribers (at least with some of them) so that for each of these subscribers, there is a defined and fixed capacity guaranteed.

Furthermore, another option of handling storage at the DSLAM is, that at least some of the storage capacity is gained by utilizing distributed storage means integrated with the broadband modems that connect the DSLAM with the subscriber, so that in other words, some of the overall DSLAM storage capacity is achieved through the use of memory chips installed on some or all of the modem cards installed at the DSLAM.

Preferably, the DSLAM further comprises backup storage means, operative to backup at least part of the communication signals' content stored at the main storage means. More preferably, the backup storage is further provided with sorting means to determine the communications signals' content that will be stored at the backup storage means in accordance with at least one pre-defined criterion associated with the media content and/or application, e.g. the content of which types applications will be stored. In addition or in the alternative, the sorting means to are operative in accordance with a service agreement pre-signed with the respective subscribers.

When media storage for the applications described above is implemented close to the DSLAM, it is typically located at the local network connected to the DSLAM network interface. As the DSLAM concentrates the streams, some of the data available on the network interface port may be blocked at the DSLAM by the switching fabric and aggregation. To achieve maximum performance, it is required by the applications to set different quality of service (QoS) for each media stream and each application. This is not always possible due to technical limitations or service provider operational constraints. This problem will magnify when many users will demand multiple unicast media storage services such as VoD, PVR, and fast channel change.

As demonstrated in Fig. 2, the media storage input and output streams are directly connected to the DSLAM switching and aggregation functions without any limitation on bandwidth. Using this architecture, the entire bandwidth load associated with the media storage streams towards the users is relived from the DSLAM network interface and the network connected to it thereafter.

For example, a network PVR can be implemented by connecting the multicast video streams (typically broadcast TV) to the media storage based on user commands. In this implementation, the only unicast connections are set between the user set top box and the DSLAM, hence no increase in bandwidth demands from the network would be required.

Further, the DSLAM can prioritize the media streams utilization of the bandwidth available from the DSLAM to the user premises, thus providing guaranteed quality of service.

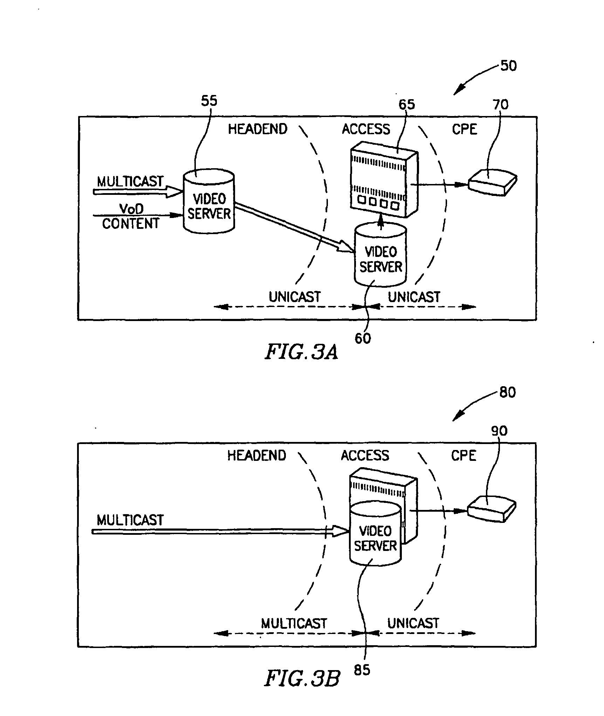

Let us turn now to Fig. 3A which shows a typical prior art network, **50,** operative to provide to its end users either multicasting type of services or VoD type of services (where PVR application is considered to be a VoD type of service). The way this network operates, is, by transmitting to the headend the content that should be provided under these two types of services, in response to the end user requirements forwarded via CPE **70,** where it is stored in video server **55.** From this video server, the headend transmits the requested content towards the access network. The VoD type content delivery can be implemented by a direct unicast connection between the video server **55** at the headend and the CPE **70.** Alternatively, to handle large number of subscribers and content, a local replica of the video server **55** is installed in the vicinity of the access network. This replica, consist of a dynamic sub-set of the content stored in the video server **55** is stored at video server **60.** From this server the transmissions will be forwarded per user's demands via DSLAM **65** through CPE **70** to the end user. However, a problem arises as the demand for PVR type of service is growing fast. Suppose 50% of the end users use the PVR service. This means that at any given moment each of the 50% of the users may get a different transmission than the others. Consequently, even if all the users were to watch, say, the very same film, still, the bandwidth required to fulfill these demands will be extremely high as the various transmissions along the path extending between video servers **55** and **60** will typically be unicast type of transmissions, thus resulting in overloading the network.

The embodiment of the present invention described in Fig. 3B, provides a solution to this problem. By this solution all transmissions will be multicasted to an access video server incorporated with or located at the vicinity of DSLAM **85.** The video server/DSLAM will have adequate storage capacity as explained hereinbefore, and the users' requirements will be met by transmitting stored information to the user's CPE **90.**

This way the problem of overloading the path extending from the headend to the DSLAM while using unicast type of transmissions may be eliminated.

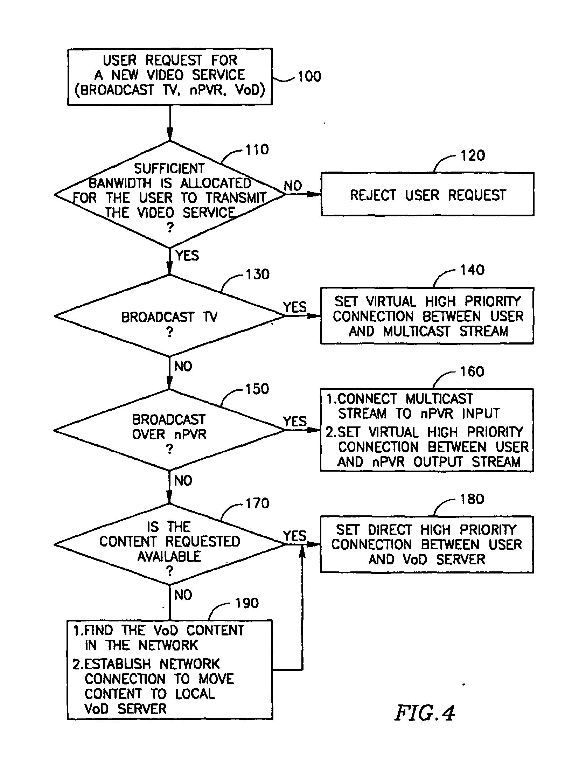

Fig. 4 presents a flow chart exemplifying a method according to an embodiment of the present invention, whereby an example of responding to a user's request for a new video service, is given. The user makes a request (e.g. by sending a command from his/her remote control via his/her set top box) for a new service such view a new live broadcast TV channel, use PVR to record and/or play a unicast or multicast channel, or request for VoD (step **100).** A separate user management system checks if there is sufficient bandwidth allocated for that user so that the request can be fulfilled **(110)** and if not, rejects the request **(120).** If the bandwidth available is sufficient, then the system checks whether this request can be fulfilled by utilizing a TV broadcast (e.g. a channel that is currently broadcasted) (**130**). If in the affirmative, the DSLAM is requested to set a high priority connection between the user and the multicast stream reaching the DSLAM, and the user may watch the channel of his/her choice **(140).** Next, the system checks if the user requires using a network PVR ("nPVR") (step **150).** An example for such a request could simply be when the user presses the "pause" button on his remote control, which means that the user would like to continue watching the same broadcast channel but with a delay. In this case, the picture will be frozen at the user's TV set, while the multicast stream will be connected the nPVR input **(160).** Thereafter, a virtual high priority connection is set between the end user and the nPVR output stream at the DSLAM, and the content that is broadcasted to other viewers is stored at the DSLAM's buffer. Once the user request to resume the display, he will receive the broadcast from the DSLAM's buffer, while that buffer still continue to store the incoming mulicasted signal. Once the user causes the buffer to become empty (e.g. by skipping commercials, using fast forward functionality, etc.) the buffer capacity is available for use for another user. In this example, if the request is not for nPVR, it is assumed to be a request for VoD, and the system checks whether the requested content is available on the local replica of the VoD server **(170).** If in the affirmative, a direct high priority, unicast connection is set between the user and the VoD server, and the requested content is forwarded to the user **(180).** If not, the requested content is searched and retrieved at another VoD server located in the network, and a network connection is established between the storage means in which the requested content is stored on the local VoD server **(190),** and upon receiving the requested content at the local VoD, step **180** is carried to allow transmission of the requested content to the user.

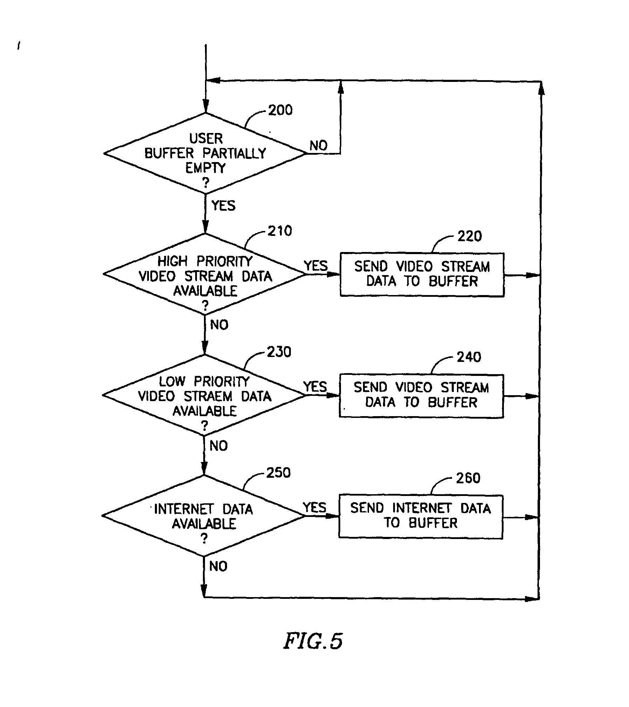

Fig. 5 presents an example of a management scheme in accordance with an embodiment of the present invention. By this example of a possible quality of service management, the management system checks whether the user storage is partially or completely empty **(200).** In case the storage is full, step **200** shall be repeated after a certain period of time. If the user storage is at least partially empty, the system checks whether a high priority video stream data is available **(210).** Such high priority video data can be related to multicast broadcast video, or unicast stream from the VoD or nPVR storage. If there is such data available, some or all of the data is sent to the user's storage (step **220),** and step **200,** where the occupancy of the storage is checked, is repeated (either immediately or after a certain period of time). If no high priority video stream data is available, the management system checks if there is low priority video stream data available **(230).** Such low priority video data can be related to picture-in-picture presentation or unicast streams associated with fast channel change. If there is such data available, some or all of the data is sent to the user's storage (step **240),** and step **200,** is repeated (either immediately or after a certain period of time). If also no low priority video stream data is available, the management system checks if there is Internet data available **(250).** If such data is available, some or all of the data is sent to the user's buffer (storageuffer or not, step **200** will be repeated either immediately or after a certain period of time.

It is appreciated that various features of the invention which are, for clarity, described in the contexts of separate embodiments may also be provided in combination in a single embodiment. Conversely, various features of the invention which are, for brevity, described in the context of a single embodiment may also be provided separately or in any suitable subcombination.

It will be appreciated by persons skilled in the art that the present invention is not limited by what has been particularly shown and described herein above. Rather the scope of the invention is defined by the claims that follow:

## Claims

1. A Digital Subscriber Line Access Multiplexer (DSLAM) comprising:
a network side interface (10, 10') adapted to receive a plurality of communication signals conveyed along a broadband network (12, 12); **characterized in that**
a storage means (15) adapted to receive at least some of said plurality of communication signals, associate corresponding priorities with the communication signals received thereat, and store their content in accordance with at least one of the associated priorities;
multiplexing means (4, 4') operative to retrieve content stored in said storage means (15) and multiplex the content thus received with run time data received at said network side interface into a multiplexed product, wherein said operation is carried while ensuring a minimum pre-defined quality of service for the multiplexed product;
a subscribers' output interface adapted to receive said multiplexed product from the multiplexing means (4, 4') and forward it along a communication line extending towards a subscriber; and
a subscribers' input interface adapted to receive information generated by subscribers.

2. A DSLAM (2, 2', 85) according to claim 1, wherein said retrieval of content stored in said storage means (15) is carried in response to information received from one or more of the subscribers.

3. A DSLAM (2, 2', 85) according to claim 1, wherein said predefined quality of service is determined based on a type of application characterizing the content of said multiplexed product.

4. A DSLAM (2, 2', 85) according to claim 1, wherein the priority associated with said communication signals is based on a type of application by which the contents of said communication signals would be utilized.

5. A DSLAM (2, 2', 85) according to claim 1, wherein said subscriber' s output interface is further adapted to forward said multiplexed product in accordance with a bandwidth associated with said subscriber' s communication line
or wherein said subscriber' s output interface is further adapted to forward said multiplexed product in accordance with priorities associated with at least one of the components comprising the multiplexed product;
or wherein said subscriber's output interface is further adapted to forward said multiplexed product in accordance with a priority assigned to the multiplexed product by said multiplexing means (4, 4').

6. A DSLAM (2, 2', 85) according to claim 1, wherein application of a personal video recording is implemented by storing at said storage means part or all of multicast video streams, based on subscribers' commands.

7. A DSLAM (2, 2', 85) according to claim 1, wherein said multiplexed product is a video stream adapted to be shared by a plurality of subscribers.

8. A DSLAM (2, 2', 85) according to claim 1, wherein said storage means (15) is further operative to allocate storage space to store the content of each of the communication signals that arc stored.

9. A DSLAM (2, 2', 85) according to claim 1, wherein said subscriber's output interface is further adapted to forward said multiplexed product in accordance with a priority assigned to the multiplexed product by said multiplexing means (4, 4') and wherein said multiplexing means is further adapted to classify said multiplexed product in accordance with pre-defined criteria and assign priority to said multiplexed product in accordance with that classification and, preferably, wherein said priority is assigned so as to assure a minimum quality of service required for the type of classification associated with said multiplexed product.

10. A DSLAM (2, 2', 85) according to claim 9, wherein the priority assigned to the multiplexed product is dependent upon at least some of the bandwidth limitations existing along the communication line extending towards the subscriber.

11. A DSLAM (2, 2', 85) according to claim 1, further comprising a storage adapted to hold a plurality of multicast video signals and identify at least one of said multicast video signals that is in conformity with information generated by a subscriber and received at said subscribers' input interface.

12. A DSLAM (2, 2', 85) according to claim 11, further adapted to unicast said at least one of said video signals identified, to the subscriber generating the information.

13. A DSLAM (2, 2', 85) according to claim 11, wherein the information generated by the subscriber is derived from a change in a channel being viewed.

14. A DSLAM (2, 2', 85) according to claim 3, wherein said storage means (15) are adapted to allocate a pre-defined storage space for storing incoming communication signals and, preferably, wherein said allocation is made in accordance with the type of application characterizing the content of said incoming communication signals or wherein any information to be stored at said
storage space after having said allocated storage space filled, shall replace the oldest information stored at said allocated storage space.

15. A DSLAM (2, 2', 85) according to claim 10, wherein said plurality of communication signals conveyed along a broadband network comprises at least a voice signal directed to a subscriber, and wherein said storage means is adapted to store said voice signal and, preferably, the DSLAM is adapted to forward to the subscriber said stored voice signal in response to information received from said subscriber.

16. A DSLAM (2, 2', 85) according to claim 1, further adapted to associate one or more of the video signals stored at said storage means for a subscriber, and forward said one or more video signals to the subscriber in response to a command received from said subscriber.

17. A DSLAM (2, 2', 85) according to claim 1, wherein the information received from the subscriber comprises media content and said media content is stored thereat.

18. A DSLAM (2, 2', 85) according to claim 1, wherein part of the capacity of said storage means is reserved for media content associated with one or more of the subscribers.

19. A DSLAM (2, 2', 85) according to claim 1, wherein said storage means (15) is further provided with storage formatting means, operative to allocate different storage sizes out of said storage means (15) in accordance with the media content and/or application to be stored;
or wherein at least part of the capacity of said storage means (15) is allocated so that to each of the subscribers associated with said DSLAM (2, 2', 85) there is a defined and fixed capacity reserved
or wherein any part of said storage means (15) is adapted to be used by any of the subscribers associated with said DSLAM (2, 2', 85).
or wherein said storage means (15) is further provided with storage formatting means, operative to allocate different storage sizes in accordance with the application to be stored and a service provisioning agreement prc-signed with the respective subscribers.

20. A DSLAM (2, 2', 85) according to claim 1, wherein at least part of said storage means (15) is divided and each of its divided parts is associated with a subscriber so as to enable storage of information per that subscriber requirements and/or commands, where preferably at least one of said divided parts is integrated with a broadband modem connecting said DSLAM (2, 2', 85) with a subscriber.

21. A DSLAM (2, 2', 85) according to claim 1, further comprising backup storage means, operative to provide a backup for at least part of the communication signals' content stored at said storage means (15).

22. A DSLAM (2, 2', 85) according to claim 21, wherein said backup storage is further provided with sorting means to determine the communications signals' content that will be stored at said backup storage means in accordance with at least one pre-defined criterion associated with the media content and/or application;
or wherein said backup storage is further provided with sorting means to determine the communications signals' content that will be stored at said backup storage means in accordance with a service agreement pre-signed with the respective subscribers.

23. A network comprising:
- a video broadcasting system adapted to provide TV broadcasting services and at least PVR services, and
- a plurality of DSLAMs (2, 2', 85) according to claim 1
which video broadcasting system comprises broadcasting means operative to multicast video signals to said plurality of DSLAMs (2, 2', 85),
wherein each of said DSLAMs (2, 2', 85) is operative to start storing said multicasted video signals upon receiving a first command from said subscriber and convey the stored video signals to said subscriber upon receiving a second command from said subscriber.

24. A method for establishing a connection between a DSLAM (2, 2', 85) and a subscriber for providing a video service to said subscriber, which method comprises:
i) receiving (100) a request initiated by a user for a video service;
ii) determining (110) whether a sufficient bandwidth has been allocated for said user to fulfill said request, and if not, rejecting (120) said request;
iii) determining (130) whether said request can be fulfilled by utilizing a channel broadcasted by a TV broadcasting service and if in the affirmative, setting (140) at said DSLAM a high priority connection between said subscriber and a multicast stream reaching said DSLAM, and comprises said channel;
iv) if by said step iii) it is determined that said request cannot be thus fulfilled, determining (150) if the subscriber' s request can be fulfilled by using a network PVR and if in the affirmative, storing the content of said multicasted stream at a storage (15) comprised in said DSLAM, establishing (160) a virtual high priority connection between said DSLAM and said subscriber, and upon receiving a command from said subscriber to provide said video service, transmitting stored video signals while continuing to store the incoming multicasted signal at said
storage.

25. A method according to claim 24, further comprising the step:
v) if by said step iv) it is determined that said request cannot be thus fulfilled, determining (170) whether the requested content is available on local replica of a VoD server and if in the affirmative, setting (180) a direct high priority, unicast connection between said VoD server and said subscriber, and forwarding the requested content to said subscriber.

26. A method according to claim 25, further comprising the step:
vi) in case the requested content is not available on local replica of a VoD server, retrieving (190) said requested content from another VoD server associated with a network with which said local VoD server is associated and transmitting said requested content to said subscriber.

## Patentansprüche

**1.** Ein Multiplexer für den Zugang an eine digitale Anschlussleitung (Digital Subscriber Line Access Multiplexer DSLAM), der Folgendes umfasst:
eine Schnittstelle (10, 10') auf Netzwerkseite, die ausgebildet ist, um eine Vielzahl von Kommunikationssignalen zu empfangen, die entlang einem Breitbandnetz (12, 12) übertragen werden, **gekennzeichnet durch**
ein Speicherungsmittel (15), das ausgebildet ist, um mindestens einige der Vielzahl von Kommunikationssignalen zu empfangen, entsprechende Prioritäten mit den dort empfangenen Kommunikationssignalen zu verknüpfen und ihren Inhalt in Übereinstimmung mit mindestens einer der verknüpften Prioritäten zu speichern,
Multiplexing-Mittel (4, 4'), die arbeiten, um Inhalt abzurufen, der in den Speicherungsmitteln (15) gespeichert ist, und den so empfangenen Inhalt mit Laufzeitdaten, die an der Schnittstelle auf Netzwerkseite empfangen werden, zu einem multiplexierten Produkt zu multiplexieren, wobei der Vorgang bei gleichzeitiger Sicherstellung einer minimalen vordefinierten Dienstqualität für das multiplexierte Produkt durchgeführt wird,
eine Teilnehmer-Ausgabeschnittstelle, die ausgebildet ist, um das multiplexierte Produkt von den Multiplexing-Mitteln (4, 4') zu empfangen und es entlang einer Kommunikationsleitung weiterzuleiten, die sich zu einem Teilnehmer hin erstreckt, und
eine Teilnehmer-Eingabe-Schnittstelle, die ausgebildet ist, um Informationen zu empfangen, die von Teilnehmern erzeugt werden.

**2.** Ein DSLAM (2, 2', 85) gemäß Anspruch 1, wobei das Abrufen von Inhalt, der in den Speicherungsmitteln (15) gespeichert ist, als Reaktion auf Informationen durchgeführt wird, die von einem oder mehreren der Teilnehmer empfangen wurden.

**3.** Ein DSLAM (2, 2', 85) gemäß Anspruch 1, wobei die vordefinierte Dienstqualität anhand einer Art von Anwendung bestimmt wird, die den Inhalt des multiplexierten Produkts kennzeichnet.

**4.** Ein DSLAM (2, 2', 85) gemäß Anspruch 1, wobei die mit den Kommunikationssignalen verknüpfte Priorität auf einer Art von Anwendung basiert, von der die Inhalte der Kommunikationssignale verwendet würden.

**5.** Ein DSLAM (2, 2', 85) gemäß Anspruch 1, wobei die Teilnehmer-Ausgabeschnittstelle weiter ausgebildet ist, um das multiplexierte Produkt entsprechend einer Bandbreite weiterzuleiten, die mit der Kommunikationsleitung des Teilnehmers verknüpft ist,
oder wobei die Teilnehmer-Ausgabeschnittstelle weiter ausgebildet ist, um das multiplexierte Produkt in Übereinstimmung mit Prioritäten weiterzuleiten, die mit mindestens einer der Komponenten verknüpft sind, die das multiplexierte Produkt umfassen,
oder wobei die Teilnehmer-Ausgabeschnittstelle weiter ausgebildet ist, um das multiplexierte Produkt entsprechend einer Priorität weiterzuleiten, die dem multiplexierten Produkt von den Multiplexing-Mitteln (4, 4') zugewiesen wurde.

**6.** Ein DSLAM (2, 2', 85) gemäß Anspruch 1, wobei die Anwendung einer persönlichen Videoaufnahme durchgeführt wird durch Speicherung eines Teils von oder aller Mehrpunktverbindung-Video-Datenströme in den Speicherungsmitteln auf der Grundlage der Befehle der Teilnehmer.

**7.** Ein DSLAM (2, 2', 85) gemäß Anspruch 1, wobei das multiplexierte Produkt ein Video-Datenstrom ist, der ausgebildet ist, um von einer Vielzahl von Teilnehmern gemeinsam genutzt zu werden.

**8.** Ein DSLAM (2, 2', 85) gemäß Anspruch 1, wobei das Speicherungsmittel (15) weiter arbeitet, um Speicherplatz zuzuweisen, um den Inhalt jedes der Kommunikationssignale zu speichern, die gespeichert sind.

**9.** Ein DSLAM (2, 2', 85) gemäß Anspruch 1, wobei die Teilnehmer-Ausgabeschnittstelle weiter ausgebildet ist, um das multiplexierte Produkt entsprechend einer Priorität weiterzuleiten, die dem multiplexierten Produkt von den Multiplexing-Mitteln (4, 4') zugewiesen wurde, und wobei das Multiplexing-Mittel weiter ausgebildet ist, um das multiplexierte Produkt nach vordefinierten Kriterien zu klassifizieren und dem multiplexierten Produkt entsprechend dieser Klassifizierung eine Priorität zuzuweisen, und wobei die Priorität vorzugsweise zugewiesen wird, um eine Mindest-Dienstqualität sicherzustellen, die für die Art von Klassifizierung erforderlich ist, welche mit dem multiplexierten Produkt verknüpft ist.

**10.** Ein DSLAM (2, 2', 85) gemäß Anspruch 9, wobei die Priorität, die dem multiplexierten Produkt zugewiesen wird, von zumindest einem Teil der Bandbreitenbegrenzungen abhängig ist, die entlang der Kommunikationsleitung existieren, welche sich zum Teilnehmer hin erstreckt.

**11.** Ein DSLAM (2, 2', 85) gemäß Anspruch 1, der weiter einen Speicher umfasst, welcher ausgebildet ist, um eine Vielzahl von Mehrpunktverbindung-Videosignalen zu enthalten und mindestens eines der Mehrpunktverbindung-Videosignale zu identifizieren, das mit Informationen übereinstimmt, die von einem Teilnehmer erzeugt wurden und an der Eingabe-Schnittstelle der Teilnehmer empfangen werden.

**12.** Ein DSLAM (2, 2', 85) gemäß Anspruch 11, der weiter ausgebildet ist, um das mindestens eine der identifizierten Videosignale mit einem Punkt-zu-Punkt Verfahren zu senden an den Teilnehmer, der die Informationen erzeugt.

**13.** Ein DSLAM (2, 2', 85) gemäß Anspruch 11, wobei die vom Teilnehmer erzeugten Informationen von einer Änderung in einem Kanal, der gesehen wird, abgeleitet werden.

**14.** Ein DSLAM (2, 2', 85) gemäß Anspruch 3, wobei die Speicherungsmittel (15) ausgebildet sind, um einen vordefinierten Speicherplatz zum Speichern eingehender Kommunikationssignale zuzuweisen, und wobei die Zuweisung vorzugsweise in Übereinstimmung mit der Art von Anwendung vorgenommen wird, die den Inhalt der eingehenden Kommunikationssignale kennzeichnet, oder wobei jede Information, die in dem Speicherplatz gespeichert werden soll, nachdem der zugewiesene Speicherplatz gefüllt wurde, die älteste Information ersetzen soll, die in dem zugewiesenen Speicherplatz gespeichert wurde.

**15.** Ein DSLAM (2, 2', 85) gemäß Anspruch 10, wobei die Vielzahl von Kommunikationssignalen, die entlang einem Breitbandnetz übertragen wird, mindestens ein Sprachsignal umfasst, das an einen Teilnehmer gerichtet ist, und wobei das Speicherungsmittel ausgebildet ist, um das Sprachsignal zu speichern, und der DSLAM vorzugsweise ausgebildet ist, um das gespeicherte Sprachsignal als Reaktion auf Informationen, die von dem Teilnehmer empfangen wurden, an den Teilnehmer weiterzuleiten.

**16.** Ein DSLAM (2, 2', 85) gemäß Anspruch 1, weiter ausgebildet, um eines oder mehrere der Videosignale, die in dem Speicherungsmittel für einen Teilnehmer gespeichert sind, zu verknüpfen und das eine oder die mehreren Videosignale als Reaktion auf einen Befehl, der von dem Teilnehmer empfangen wurde, an den Teilnehmer weiterzuleiten.

**17.** Ein DSLAM (2, 2', 85) gemäß Anspruch 1, wobei die vom Teilnehmer empfangenen Informationen Medieninhalt umfassen und der Medieninhalt dort gespeichert ist.

**18.** Ein DSLAM (2, 2', 85) gemäß Anspruch 1, wobei ein Teil der Kapazität des Speicherungsmittels für Medieninhalt reserviert ist, der mit einem oder mehreren der Teilnehmer verknüpft ist.

**19.** Ein DSLAM (2, 2', 85) gemäß Anspruch 1, wobei das Speicherungsmittel (15) weiter mit Speicherformatierungsmitteln ausgestattet ist, die arbeiten, um verschiedene Speichergrößen aus dem Speicherungsmittel (15) entsprechend dem Medieninhalt und/oder der zu speichernden Anwendung zuzuweisen,
oder wobei mindestens ein Teil der Kapazität der Speicherungsmittel (15) so zugeordnet ist, dass für jeden der mit dem DSLAM (2, 2', 85) verknüpften Teilnehmer eine definierte und feste Kapazität reserviert ist,
oder wobei jeder Teil des Speicherungsmittels (15) ausgebildet ist, um von jedem der Teilnehmer verwendet zu werden, die mit dem DSLAM (2, 2', 85) verknüpft sind,
oder wobei das Speicherungsmittel (15) weiter mit Speicherformatierungsmitteln ausgestattet ist, die arbeiten, um verschiedene Speichergrößen entsprechend der zu speichernden Anwendung und einer Diensteinrichtungsvereinbarung zuzuweisen, die im Voraus mit den entsprechenden Teilnehmern unterzeichnet wurde.

**20.** Ein DSLAM (2, 2', 85) gemäß Anspruch 1, wobei mindestens ein Teil des Speicherungsmittels (15) geteilt ist und jeder der geteilten Teile mit einem Teilnehmer verknüpft ist, um die Speicherung von Informationen für diese Teilnehmeranforderungen und/oder -befehlen zu ermöglichen, wobei vorzugsweise mindestens einer der geteilten Teile in ein Breitbandmodem integriert ist, das den DSLAM (2, 2', 85) mit einem Teilnehmer verbindet.

**21.** Ein DSLAM (2, 2', 85) gemäß Anspruch 1, der weiter Sicherungsspeichermittel umfasst, welche arbeiten, um eine Sicherung für mindestens einen Teil des Inhalts der Kommunikationssignale bereitzustellen, der in dem Speicherungsmittel (15) gespeichert ist.

**22.** Ein DSLAM (2, 2', 85) gemäß Anspruch 21, wobei der Sicherungsspeicher weiter mit Sortiermitteln zur Bestimmung des Inhalts der Kommunikationssignale versehen ist, die in den Sicherungsspeichermitteln in Übereinstimmung mit mindestens einem vordefinierten Kriterium gespeichert werden, das mit dem Medieninhalt und/oder der Anwendung verknüpft ist,
oder wobei der Sicherungsspeicher weiter mit Sortiermitteln zur Bestimmung des Inhalts der Kommunikationssignale versehen ist, die in den Sicherungsspeichermitteln in Übereinstimmung mit einer Dienstvereinbarung gespeichert werden, die mit den jeweiligen Teilnehmern im Voraus unterzeichnet wurde.

**22.** Ein Netzwerk, das Folgendes umfasst:
- ein Video-Rundfunksystem, ausgebildet, um Fernseh-Rundfunkdienste und mindestens PVR-Dienste bereitzustellen, und
- eine Vielzahl von DSLAMs (2, 2', 85) gemäß Anspruch 1, wobei das Video-Rundfunksystem Rundfunkmittel umfasst, die arbeiten, um Videosignale an die Vielzahl von DSLAMs (2, 2', 85) nach einem Mehrpunktverbindungsverfahren zu senden,
wobei jeder der DSLAMs (2, 2', 85) arbeitet, um bei Empfang eines ersten Befehls von dem Teilnehmer mit der Speicherung der nach einem Mehrpunktverbindungsverfahren gesendeten Videosignale zu beginnen und bei Empfang eines zweiten Befehls von dem Teilnehmer die gespeicherten Videosignale an den Teilnehmer zu übertragen.

**24.** Ein Verfahren zur Herstellung einer Verbindung zwischen einem Multiplexer für den Zugang an eine digitale Anschlussleitung (DSLAM) (2, 2', 85) und einem Teilnehmer zur Bereitstellung eines Videodienstes an den Teilnehmer, wobei das Verfahren Folgendes umfasst:
i) Empfang (100) einer Anforderung eines Videodienstes, die von einem Benutzer initiiert wird,
ii) Ermitteln (110), ob dem Benutzer genügend Bandbreite zur Erfüllung der Anforderung zugewiesen wurde, und wenn nicht, Zurückweisen (120) der Anforderung,
iii) Ermitteln (130), ob die Anforderung durch Nutzung eines Kanals, der von einem Fernseh-Rundfunkdienst ausgestrahlt wird, erfüllt werden kann, und wenn ja, Setzen (140) einer Verbindung mit hoher Priorität an dem DSLAM zwischen dem Teilnehmer und einem Mehrpunktverbindung-Strom, der den DSLAM erreicht und den Kanal umfasst),
iv) wenn im Schritt iii) festgestellt wird, dass die Anforderung so nicht erfüllt werden kann, Ermitteln (150), ob die Anforderung des Teilnehmers erfüllt werden kann, durch Verwendung eines Netzwerk-PVRs, und wenn ja, Speicherung des Inhalts des nach einem Mehrpunktverbindungsverfahren gesendeten Stroms in einem Speicher (15), der in dem DSLAM umfasst ist, Erstellung (160) einer virtuellen Verbindung mit hoher Priorität zwischen dem DSLAM und dem Teilnehmer, und nach Empfang eines Befehls von dem Teilnehmer zur Bereitstellung des Videodienstes, Senden gespeicherter Videosignale bei gleichzeitiger fortgesetzter Speicherung des eingehenden nach einem Mehrpunktverbindungsverfahren gesendeten Signals in dem Speicher.

**25.** Ein Verfahren gemäß Anspruch 24, das weiter folgenden Schritt umfasst:
v) wenn in dem Schritt iv) festgestellt wird, dass die Anforderung so nicht erfüllt werden kann, Ermitteln (170), ob der angeforderte Inhalt auf der lokalen Kopie eines VoD-Servers verfügbar ist, und wenn ja, Setzen (180) einer direkten Punkt-zu-Punkt-Verbindung mit hoher Priorität zwischen dem VoD-Server und dem Teilnehmer und Weiterleiten des angeforderten Inhalts an den Teilnehmer.

**26.** Ein Verfahren gemäß Anspruch 25, das weiter folgenden Schritt umfasst:
vi) falls der angeforderte Inhalt nicht auf einer lokalen Kopie eines VoD-Servers verfügbar ist, Abrufen (190) des angeforderten Inhalts von einem anderen VoD-Server, der mit einem Netzwerk verknüpft ist, mit dem der lokale VoD-Server verknüpft ist, und Senden des angeforderten Inhalts an den Teilnehmer.

## Revendications

1. Multiplexeur d'accès de ligne d'abonné numérique, DSLAM, comprenant :
une interface de côté réseau (10, 10') apte à recevoir une pluralité de signaux de communication transportés le long d'un réseau de bande large (12, 12) ;
**caractérisé par**
un moyen de stockage (15) apte à recevoir au moins certains de ladite pluralité de signaux de communication, associer des priorités correspondantes aux signaux de communication reçus par celui-ci, et stocker leur contenu en fonction d'au moins une des priorités associées ;
des moyens de multiplexage (4, 4) opérationnels pour extraire un contenu stocké dans lesdits moyens de stockage (15) et multiplexer le contenu ainsi reçu avec des données d'exécution reçues à ladite interface de côté réseau dans un produit multiplexé, dans lequel ladite opération est effectuée en assurant une qualité de service prédéfinie minimale pour le produit multiplexé ;
une interface de sortie d'abonnés apte à recevoir ledit produit multiplexé des moyens de multiplexage (4, 4') et à le transférer le long d'une ligne de communication s'étendant vers un abonné ; et
une interface d'entrée d'abonnés apte à recevoir des informations générées par des abonnés.

2. DSLAM (2, 2', 85) selon la revendication 1, dans lequel ladite extraction de contenu stocké dans ledit moyen de stockage (15) est effectuée en réponse aux informations reçues d'un ou plusieurs des abonnés.

3. DSLAM (2, 2', 85) selon la revendication 1, dans lequel ladite qualité de service prédéfinie est déterminée sur la base d'un type d'application caractérisant le contenu dudit produit multiplexé.

4. DSLAM (2, 2', 85) selon la revendication 1, dans lequel la priorité associée aux dits signaux de communication est basée sur un type d'application par lequel le contenu desdits signaux de communication serait utilisé.

5. DSLAM (2, 2', 85) selon la revendication 1, dans lequel l'interface de sortie d'abonnés est en outre apte à transférer ledit produit multiplexé en fonction d'une largeur de bande associée à ladite ligne de communication d'abonnés,
ou dans lequel ladite interface de sortie d'abonnés est en outre apte à transférer ledit produit multiplexé en fonction de priorités associées à au moins l'un des composants comprenant le produit multiplexé ;
ou dans lequel ladite interface de sortie d'abonnés est en outre apte à transférer ledit produit multiplexé en fonction d'une priorité attribuée au produit multiplexé par lesdits moyens de multiplexage (4, 4').

6. DSLAM (2, 2', 85) selon la revendication 1, dans lequel l'application d'un enregistrement vidéo personnel est mise en oeuvre en stockant, au dit moyen de stockage, une partie ou l'intégralité des flux vidéo multicast sur la base des commandes d'abonnés.

7. DSLAM (2, 2', 85) selon la revendication 1, dans lequel ledit produit multiplexé est un flux vidéo apte à être partagé par une pluralité d'abonnés.

8. DSLAM (2, 2', 85) selon la revendication 1, dans lequel ledit moyen de stockage (15) est en outre opérationnel pour allouer de l'espace de stockage pour stocker le contenu de chacun des signaux de communication qui sont stockés.

9. DSLAM (2, 2', 85) selon la revendication 1, dans lequel ladite interface de sortie d'abonnés est en outre apte à transférer ledit produit multiplexé en fonction d'une priorité attribuée au produit multiplexé par lesdits moyens de multiplexage (4, 4') et dans lequel lesdits moyens de multiplexage sont en outre aptes à classifier ledit produit multiplexé en fonction de critères prédéfinis et d'attribuer une priorité au dit produit multiplexé en fonction de cette classification et, de préférence, dans lequel ladite priorité est attribuée pour assurer une qualité de service minimale requise pour le type de classification associé au dit produit multiplexé.

10. DSLAM (2, 2', 85) selon la revendication 9, dans lequel la priorité attribuée au produit multiplexé dépend d'au moins certaines des limitations de largeur de bande existant le long de la ligne de communication s'étendant vers l'abonné.

11. DSLAM (2, 2', 85) selon la revendication 1, comprenant en outre un stockage apte à contenir une pluralité de signaux vidéo multicast et à identifier au moins l'un desdits signaux vidéo multicast qui est en conformité avec les informations générées par un abonné et reçues à ladite interface d'entrée d'abonnés.

12. DSLAM (2, 2', 85) selon la revendication 11, en outre apte à effectuer la diffusion unicast dudit au moins un desdits signaux vidéo identifiés à l'abonné générant les informations.

13. DSLAM (2, 2', 85) selon la revendication 11, dans lequel les informations générées par l'abonné sont dérivées d'un changement de canal considéré.

14. DSLAM (2, 2', 85) selon la revendication 3, dans lequel ledit moyen de stockage (15) est apte à allouer un espace de stockage prédéfini pour stocker des signaux de communication entrants et, de préférence, dans lequel ladite allocation est effectuée en fonction du type d'application caractérisant le contenu desdits signaux de communication entrants ou dans lequel des informations à stocker dans ledit espace de stockage après avoir rempli ledit espace de stockage alloué doivent remplacer les plus anciennes informations stockées dans ledit espace de stockage alloué.

15. DSLAM (2, 2', 85) selon la revendication 10, dans lequel ladite pluralité de signaux de communication transportés le long d'un réseau de bande large comprend au moins un signal vocal dirigé vers un abonné, et dans lequel ledit moyen de stockage est apte à stocker ledit signal vocal et, de préférence, le DSLAM est apte à transférer à l'abonné ledit signal vocal stocké en réponse aux informations reçues dudit abonné.

16. DSLAM (2, 2', 85) selon la revendication 1, en outre apte à associer un ou plusieurs des signaux vidéo stockés dans ledit moyen de stockage à un abonné, et à transférer ledit un ou plusieurs signaux vidéo à l'abonné en réponse à une commande reçue dudit abonné.

17. DSLAM (2, 2', 85) selon la revendication 1, dans lequel les informations reçues de l'abonné comprennent un contenu multimédia et ledit contenu multimédia est stocké dans celles-ci.

18. DSLAM (2, 2', 85) selon la revendication 1, dans lequel une partie de la capacité dudit moyen de stockage est réservée au contenu multimédia associé à un ou plusieurs des abonnés.

19. DSLAM (2, 2', 85) selon la revendication 1, dans lequel ledit moyen de stockage (15) est en outre muni d'un moyen de formatage de stockage opérationnel pour allouer différentes tailles de stockage dudit moyen de stockage (15) en fonction du contenu multimédia et/ou de l'application à stocker ;
ou dans lequel au moins une partie de la capacité dudit moyen de stockage (15) est allouée de sorte qu'il y ait une capacité définie et fixe réservée à chacun des abonnés associés au dit DSLAM (2, 2', 85),
ou dans lequel n'importe quelle partie dudit moyen de stockage (15) est apte à être utilisée par n'importe lequel des abonnés associés au DSLAM (2, 2', 85),
ou dans lequel ledit moyen de stockage (15) est en outre muni d'un moyen de formatage de stockage opérationnel pour allouer différentes tailles de stockage en fonction de l'application à stocker et d'un contrat de prestation de services signé au préalable avec les abonnés respectifs.

20. DSLAM (2, 2', 85) selon la revendication 1, dans lequel au moins une partie dudit moyen de stockage (15) est divisée et chacune de ses parties divisées est associée à un abonné pour permettre le stockage d'informations en fonction des exigences et/ou des commandes de cet abonné, où de préférence au moins une desdites parties divisées est intégrée à un modem de bande large connectant ledit DSLAM (2, 2', 85) à un abonné.

21. DSLAM (2, 2', 85) selon la revendication 1, comprenant en outre un moyen de stockage de sauvegarde opérationnel pour fournir une sauvegarde pour au moins une partie des contenus de signaux de communication stockés dans ledit moyen de stockage (15).

22. DSLAM (2, 2', 85) selon la revendication 21, dans lequel ledit moyen de stockage de sauvegarde est en outre muni d'un moyen de tri pour déterminer les contenus de signaux de communication à stocker dans ledit moyen de stockage de sauvegarde en fonction d'au moins un critère prédéfini associé au contenu multimédia et/ou à l'application ;
ou dans lequel ledit moyen de stockage de sauvegarde est en outre muni d'un moyen de tri pour déterminer les contenus de signaux de communication à stocker dans ledit moyen de stockage de sauvegarde en fonction d'un contrat de service signé au préalable avec les abonnés respectifs.

23. Réseau comprenant :
- un système de diffusion vidéo apte à fournir des services de télédiffusion et au moins des services d'enregistrement vidéo personnel, et
- une pluralité de DSLAM (2, 2', 85) selon la revendication 1,
lequel système de diffusion vidéo comprend des moyens de diffusion opérationnels pour effectuer la diffusion multicast de signaux vidéo vers ladite pluralité de DSLAM (2, 2', 85),
dans lequel chacun desdits DSLAM (2, 2', 85) est opérationnel pour commencer à stocker lesdits signaux vidéo diffusés en multicast à la réception d'une première commande dudit abonné et transporter les signaux vidéo stockés vers ledit abonné à la réception d'une deuxième commande dudit abonné.

24. Procédé pour établir une connexion entre un DSLAM (2, 2', 85) et un abonné pour fournir un service vidéo au dit abonné, lequel procédé comprend :
i) la réception (100) d'une demande émise par un utilisateur pour un service vidéo ;
ii) la détermination (110) si une largeur de bande suffisante a été allouée au dit utilisateur pour remplir ladite demande et, si tel n'est pas le cas, le rejet (120) de ladite demande ;
iii) la détermination (130) si ladite demande peut être remplie en utilisant un canal diffusé par un service de télédiffusion et, si tel est le cas, l'établissement (140) au dit DSLAM d'une connexion de haute priorité entre ledit abonné et un flux de diffusion multicast atteignant ledit DSLAM, et comprenant ledit canal ;
iv) si, à ladite étape iii), il est déterminé que ladite demande ne peut pas être remplie, la détermination (150) si la demande de l'abonné peut être remplie en utilisant un service d'enregistrement vidéo personnel de réseau et, si tel est le cas, le stockage du contenu dudit flux diffusé en multicast dans un stockage (15) compris dans ledit DSLAM, l'établissement (160) d'une connexion de haute priorité virtuelle entre ledit DSLAM et ledit abonné et, à la réception d'une commande dudit abonné pour fournir ledit service vidéo, la transmission de signaux vidéo stockés tout en continuant à stocker le signal entrant diffusé en multicast dans ledit stockage.

25. Procédé selon la revendication 24, comprenant en outre l'étape suivante :
v) si, à ladite étape iv), il est déterminé que ladite demande ne peut pas être remplie, la détermination (170) si le contenu demandé est disponible sur la réplique locale d'un serveur de vidéo à la demande et, si tel est le cas, l'établissement (180) d'une connexion de diffusion unicast directe de haute priorité entre ledit serveur de vidéo à la demande et ledit abonné, et le transfert du contenu demandé au dit abonné.

26. Procédé selon la revendication 25, comprenant en outre l'étape suivante :
vi) dans le cas où le contenu demandé n'est pas disponible sur la réplique locale d'un serveur de vidéo à la demande, l'extraction (190) dudit contenu demandé d'un autre serveur de vidéo à la demande associé à un réseau auquel ledit serveur de vidéo à la demande local est associé et la transmission dudit contenu demandé au dit abonné.
